# EUROPÄISCHE PATENTSCHRIFT

(11) **EP 0 477 418 B1**
(45) Veröffentlichungstag und Bekanntmachung des Hinweises auf die Patenterteilung: **03.04.1996**
(21) Anmeldenummer: 90118712.0
(22) Anmeldetag: 28.09.1990
(51) Int. Cl.: G01F 1/66

(54) **Ultraschall (US)-Durchflussmesser-Einbaueinheit zum Einbauen in ein Messrohr**
Ultrasonic flowmeter unit to be intented in a measuring tube
Module de mesure de débit à ultrasons pour intégrer dans une conduite de mesure

(43) Veröffentlichungstag der Anmeldung: 01.04.1992
(73) Patentinhaber: SIEMENS AKTIENGESELLSCHAFT, D-80333 München (DE)
(72) Erfinder: Magori, Valentin, W-8000 München 90 (DE)

(56) Entgegenhaltungen:
- EP-A- 0 223 123
- EP-A- 0 323 694
- EP-A- 0 367 111
- WO-A-90/02317
- GB-A- 1 541 419
- GB-A- 2 101 318
- US-A- 3 890 423
- PATENT ABSTRACTS OF JAPAN vol. 8, no. 215 (P-305)(1652), 2 Oktober 1984 ; & JP-A-59 100 820

## Beschreibung

Die vorliegende Erfindung betrifft eine Ultraschall (US)-Durchflußmesser-Einbaueinheit zum Einbauen in ein Meßrohr, insbesondere zur Luftmassenmessung in einem Kraftfahrzeugmotor, mit zwei US-Wandlern, die abwechselnd als Sendewandler oder Empfangswandler arbeiten, und einer Reflektoranordnung zur Bildung eines das Meßrohr durchlaufenden Reflexionsweges für US-Wellen zwischen dem jeweiligen US-Sendewandler und dem jeweiligen US-Empfangswandler.

US-Durchflußmesser mit Reflektoranordnungen sind aus US-A-3 890 423 und GB-A-2 101 318 bekannt.

In verschiedenen Anwendungsbereichen, z. B. in der Kraftfahrzeugtechnik, besteht ein Bedarf nach einem kompakten Durchflußmesser, der ohne besondere Schwierigkeiten in ein Meßrohr, das entweder bereits mit einer entsprechenden Aufnahmeöffnung versehen ist oder bei dem die erforderliche Aufnahmeöffnung nachträglich gebildet werden muß, einbaubar ist.

Der vorliegenden Erfindung liegt die Aufgabe zugrunde, eine Einbaueinheit der genannten Art zu schaffen, die einen einfachen, robusten Aufbau hat, problemlos auch nachträglich in ein betreffendes Meßrohr einbaubar ist und eine leicht zugängliche Betriebs- und Meßelektronik enthält.

Die Aufgabe wird durch eine Ultraschall-Durchflußmesser-Einbaueinheit der eingangs genannten Art und entsprechend dem Oberbegriff des Patentanspruchs 1 gelöst, die erfindungsgemäß dadurch gekennzeichnet ist, daß eine Träger- und Montageplatte zum Tragen des einen US-Wandlers, des anderen US-Wandlers und der Reflektoranordnung sowie zum abdichtenden Montieren der Einbaueinheit über einer Aufnahmeöffnung für die Einbaueinheit in dem Meßrohr vorgesehen ist, wobei der eine US-Wandler und der andere US-Wandler in einem vorbestimmten Winkel zueinander und zu der Reflektoranordnung vorzugsweise symmetrisch geneigt angeordnet sind und wobei die Reflektoranordnung mittels einer Haltekonstruktion derart von der Träger- und Montageplatte in einem Abstand von dieser getragen ist, daß die Reflektoranordnung innerhalb des Meßrohrs zusammen mit den US-Wandlern den zur Durchflußmessung erforderlichen Reflexionsweg bildet, und daß die Träger- und Montageplatte vorzugsweise zwischen den beiden US-Wandlern auf ihrer dem Meßrohr abgewandten Seite eine Betriebs- und Meßelektronikeinheit auf sich trägt.

Vorteilhafte Weiterbildungen der Erfindung sind durch die in den Unteransprüchen angegebenen Merkmale gekennzeichnet.

Im folgenden wird die Erfindung anhand mehrerer Figuren, die bevorzugte Ausführungsbeispiele der Erfindung betreffen, im einzelnen beschrieben.
- Fig. 1 zeigt: eine schematische Seitenansicht der Einbaueinheit gemäß einem ersten Ausführungsbeispiel und eine Schnittansicht eines Meßrohrs, in das die Einbaueinheit einzubauen ist.
- Fig. 2 zeigt: schematisch eine Längsschnittansicht und eine Querschnittansicht einer in ein Meßrohr eingebauten Einbaueinheit gemäß einem zweiten Ausführungsbeispiel der Erfindung.
- Fig. 3 zeigt: eine schematische Darstellung einer modifizierten Ausführungsform der Einbaueinheit gemäß Fig. 2.
- Fig. 4 zeigt: eine schematische Querschnittansicht einer vorteilhaften Ausgestaltung der Einbaueinheit gemäß Fig. 2.
- Fig. 5 zeigt: eine schematische Darstellung eines weiteren Ausführungsbeispiels der Erfindung.
- Fig. 6 zeigt: eine schematische Darstellung eines weiteren Ausführungsbeispiels der Erfindung.

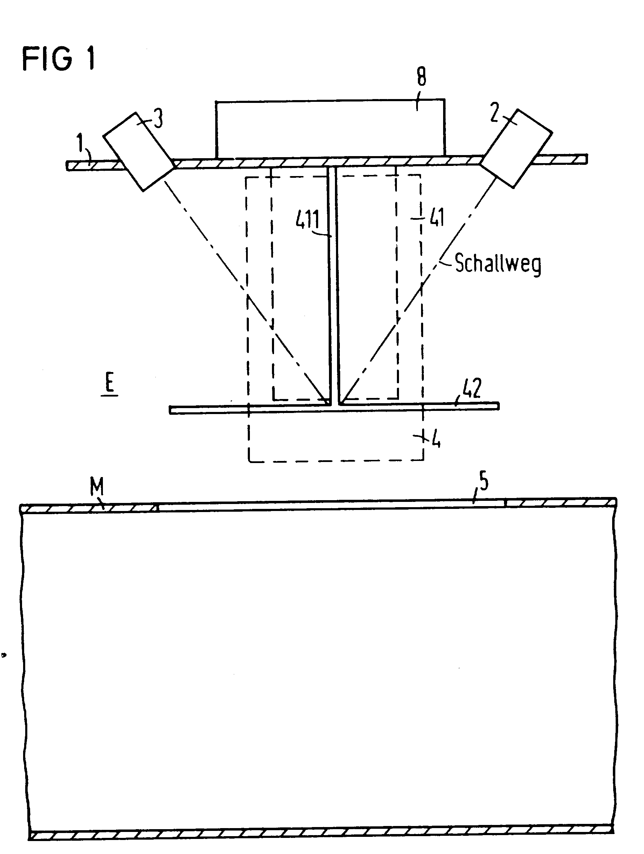

Wie Fig. 1 zeigt, ist für die Einbaueinheit eine Träger- und Montageplatte 1 zum Tragen des einen US-Wandlers 2, des anderen US-Wandlers 3 und der Reflektoranordnung 4 sowie zum abdichtenden Montieren der Einbaueinheit E über einer Aufnahmeöffnung 5 für die Einbaueinheit E in dem Meßrohr M vorgesehen, wobei der eine US-Wandler 2 und der andere US-Wandler 3 in einem vorbestimmten Winkel zueinander und zu der Reflektoranordnung 4 symmetrisch geneigt angeordnet sind. Die Reflektoranordnung 4 ist mittels einer Haltekonstruktion 41 derart von der Träger- und Montageplatte 1 in einem Abstand von dieser getragen, daß die Reflektoranordnung innerhalb des Meßrohrs M zuammen mit den US-Wandlern 2, 3 den zur Durchflußmessung erforderlichen Reflexionsweg bildet. Die Träger- und Montageplatte 1 trägt zwischen den beiden US-Wandlern 2, 3 auf ihrer dem Meßrohr M abgewandten Seite eine Betriebs- und Meßelektronikeinheit 8 auf sich. Die Reflektoranordnung 4 enthält in diesem Ausführungsbeispiel einen einzigen Reflektorkörper 42 zur Bildung eines V-förmigen Reflexionsweges.

Die Reflektoranordnung 4 kann jedoch auch einen Reflektorkörper 43 zur Bildung eines W-förmigen Reflexionsweges unter Einbeziehung der dem Reflektorkörper gegenüberliegenden wandlerseitigen Innenwandung des Meßrohrs M oder der meßrohrseitigen Fläche der Träger- und Montageplatte 1 enthalten, wobei auf dem Reflektorkörper 43 vorzugsweise mittig zwischen den Strahlachsen der US-Wandler 2, 3 ein zumindest reflexionsarmer, beispielsweise aus Filz bestehender Hilfskörper 44 zur Vermeidung einer bei der Messung störenden Reflexion von Streustrahlen des US-Sendewandlers angeordnet sein kann, vergl. Fig. 5.

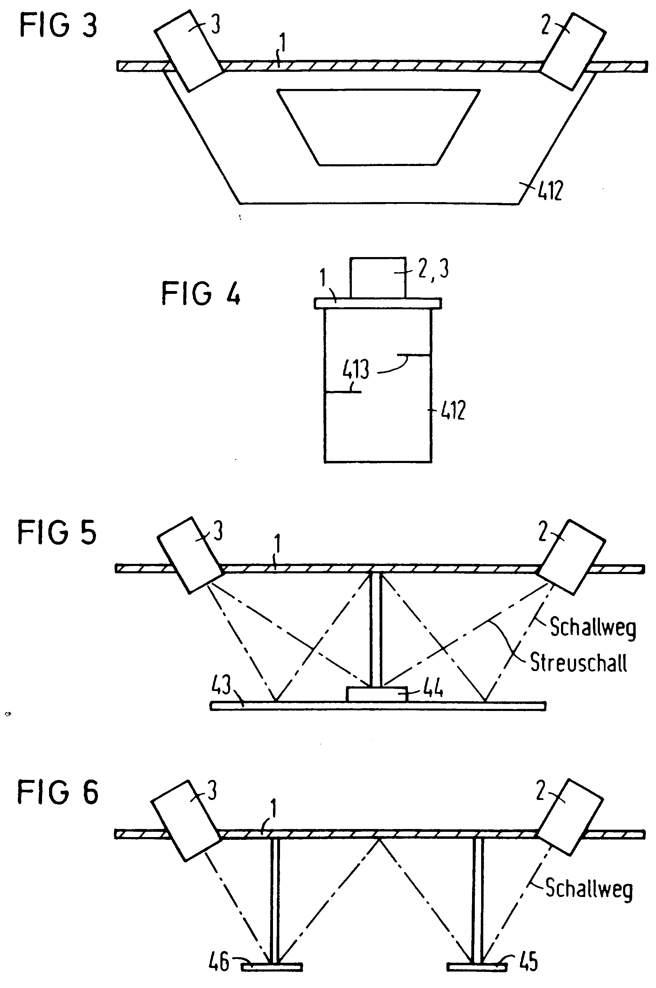

Die Reflektoranordnung 4 kann auch zwei Reflektorkörper 45, 46 zur Bildung eines W-förmigen Reflexionsweges unter Einbeziehung der der Reflektorebene gegenüberliegenden wandlerseitigen Innenwandung des Meßrohrs M oder der meßrohrseitigen Fläche der Träger- und Montageplatten 1 enthalten, vergl. Fig. 6.

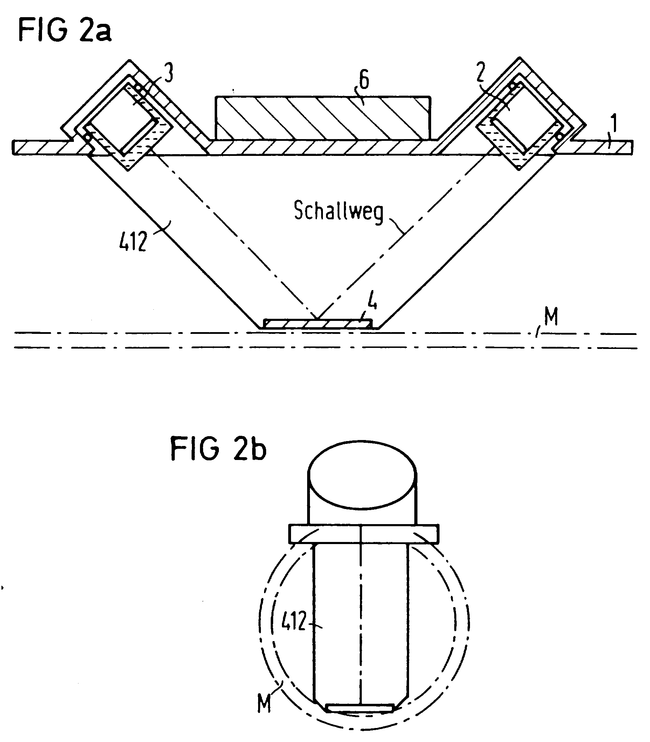

Gemäß Fig. 1 besteht die Haltekonstruktion 41 aus einem Gestänge 411. Sie kann jedoch gemäß einem Ausführungsbeispiel aus einer in Durchflußrichtung offenen wannenartigen Blechkonstruktion 412 bestehen, wobei die Reflektoranordnung 4 auf dem Boden der wannenförmigen Blechkonstruktion 412 angeordnet ist, vergl. Fig. 2. Die Seitenwandungen der wannenförmigen Blechkonstruktion 412 können Ausnehmungen zur Gewichtsverminderung und/oder zum Zwecke eines Gas- oder Flüssigkeitsaustausches zwischen Innen- und Außenseite der wannenförmigen Blechkonstruktion 412 aufweisen, vergl. Fig. 3.

Die Seitenwandungen sind zweckmäßigerweise derart geformt und/oder ausgerichtet, daß sie als Leitbleche zur Strömungsharmonisierung und/oder zur Bildung eines relevanten Teilstroms benutzbar sind.

Vorzugsweise ist die wannenförmige Blechkonstruktion 412 einstückig ausgebildet. Eine vorteilhafte Ausgestaltung der Erfindung sieht vor, daß die Seitenwandungen zumindest eine in das Innere der wannenförmigen Blechkonstruktion 412 hinein abgewinkelte Blechfahne 413 zur Strömungsleitung und/oder Verhinderung der Bildung parasitärer Schallwege aufweisen, vergl. Fig. 4.

## Patentansprüche

1. Ultraschall (US)-Durchflußmesser-Einbaueinheit zum Einbauen in ein Meßrohr, insbesondere zur Luftmassenmessung in einem Kraftfahrzeugmotor, mit zwei US-Wandlern, die abwechselnd als Sendewandler oder Empfangswandler arbeiten, und einer Reflektoranordnung zur Bildung eines das Meßrohr durchlaufenden Reflexionsweges für US-Wellen zwischen dem jeweiligen US-Sendewandler und dem jeweiligen US-Empfangswandler, **dadurch gekennzeichnet**, daß eine Träger- und Montageplatte (1) zum Tragen des einen US-Wandlers (2), des anderen US-Wandlers (3) und der Reflektoranordnung (4) sowie zum abdichtenden Montieren der Einbaueinheit (E) über einer Aufnahmeöffnung (5) für die Einbaueinheit (E) in dem Meßrohr (M) vorgesehen ist, wobei der eine US-Wandler (2) und der andere US-Wandler (3) in einem vorbestimmten Winkel zueinander und zu der Reflektoranordnung (4), vorzugsweise symmetrisch, geneigt angeordnet sind und wobei die Reflektoranordnung (4) mittels einer Haltekonstruktion (41) derart von der Träger- und Montageplatte (1) in einem Abstand von dieser getragen ist, daß die Reflektoranordnung innerhalb des Meßrohrs (M) zusammen mit den US-Wandlern (2,3) den zur Durchflußmessung erforderlichen Reflexionsweg bildet, und daß die Träger- und Montageplatte (1) vorzugsweise zwischen den beiden US-Wandlern (2,3) auf ihrer dem Meßrohr (M) abgewandten Seite eine Betriebs- und Meßelektronikeinheit (6) auf sich trägt.

2. Ultraschall-Durchflußmesser-Einbaueinheit nach Anspruch 1, **dadurch gekennzeichnet,** daß die Reflektoranordnung (4) einen einzigen Reflektorkörper (42) zur Bildung eines V-förmigen Reflexionsweges enthält.

3. Ultraschall-Durchflußmesser-Einbaueinheit -Einbaueinheit nach Anspruch 2, **dadurch gekennzeichnet**, daß die Reflektoranordnung (4) einen Reflektorkörper (43) zur Bildung eines W-förmigen Reflexionsweges unter Einbeziehung der dem Reflektorkörper gegenüberliegenden wandlerseitigen Innenwandung des Meßrohrs (M) oder der meßrohrseitigen Fläche der Träger- und Montageplatte (1) enthält und daß auf dem Reflektorkörper (43) vorzugsweise mittig zwischen den Strahlachsen der US-Wandler (2, 3) ein zumindest reflexionsarmer, beispielsweise aus Filz bestehender Hilfskörper (44) zur Vermeidung einer bei der Messung störenden Reflexion von Streustrahlen des US-Sendewandlers angeordnet ist.

4. Ultraschall-Durchflußmesser-Einbaueinheit nach Anspruch 1, **dadurch gekennzeichnet,** daß die Reflektoranordnung (4) zwei Reflektorkörper (45, 46) zur Bildung eines W-förmigen Reflexionsweges unter Einbeziehung der der Reflektorenebene gegenüberliegenden wandlerseitigen Innenwandung des Meßrohrs (M) oder der meßrohrseitigen Fläche der Träger- und Montageplatten (1) enthält.

5. Ultraschall-Durchflußmesser-Einbaueinheit nach einem der vorhergehenden Ansprüche, **dadurch gekennzeichnet,** daß die Haltekonstruktion (41) aus einem Gestänge (411) besteht.

6. Ultraschall-Durchflußmesser-Einbaueinheit nach einem der Ansprüche 1 bis 4, **dadurch gekennzeichnet,** daß die Haltekonstruktion (41) aus einer in Durchflußrichtung offenen wannenartigen Blechkonstruktion (412) besteht, wobei die Reflektoranordnung (4) auf dem Boden der wannenförmigen Blechkonstruktion (412) angeordnet ist.

7. Ultraschall-Durchflußmesser-Einbaueinheit nach Anspruch 6, **dadurch gekennzeichnet,** daß die Seitenwandungen der wannenförmigen Blechkonstruktion (412) Ausnehmungen zur Gewichtsverminderung und/oder zum Zwecke eines Gas- oder Flüssigkeitsaustausches zwischen Innen- und Außenseite der wannenförmigen Blechkonstruktion (412) aufweist.

8. Ultraschall-Durchflußmesser-Einbaueinheit nach Anspruch 6 oder 7, **dadurch gekennzeichnet,** daß die Seitenwandungen derart geformt und/oder ausgerichtet sind, daß sie als Leitbleche zur Strömungsharmonisierung und/oder zur Bildung eines relevanten Teilstroms benutzbar sind.

9. Ultraschall-Durchflußmesser-Einbaueinheit nach einem der Ansprüche 6 bis 8, **dadurch gekennzeichnet,** daß die wannenförmige Blechkonstruktion (412) einstückig ausgebildet ist.

10. Ultraschall-Durchflußmesser-Einbaueinheit nach Anspruch 9, **dadurch gekennzeichnet,** daß die Seitenwandungen zumindest eine in das Innere der wannenförmigen Blechkonstruktion (412) hinein abgewinkelte Blechfahne (413) zur Strömungsleitung und/oder Verhinderung der Bildung parasitärer Schallwege aufweisen.

## Claims

1. Built-in ultrasound (US) flowmeter unit for installation in a measuring tube, in particular for air mass flow rate measurement in a motor vehicle engine, having two US transducers which operate alternately as a transmitting transducer or receiving transducer, and having a reflector arrangement for forming a reflection path, which passes through the measuring tube, for US waves between the respective US transmitting transducer and the respective US receiving transducer, characterized in that a supporting and mounting plate (1) is provided in order to support one US transducer (2), the other US transducer (3) and the reflector arrangement (4) as well as for sealed mounting of the built-in unit (E) over a retaining opening (5) for the built-in unit (E) in the measuring tube (M), one US transducer (2) and the other US transducer (3) being arranged inclined at a predetermined angle to one another and to the reflector arrangement (4), preferably symmetrically, and the reflector arrangement (4) being supported by means of a retaining structure (41) by the supporting and mounting plate (1), and at a distance from it, in such a manner that the reflector arrangement within the measuring tube (M) together with the US transducers (2, 3) forms the reflection path required for flow measurement, and in that the supporting and mounting plate (1) is preferably fitted with an operating and measuring electronic unit (6), between the two US transducers (2, 3), on its side facing away from the measuring tube (M).

2. Built-in ultrasound flowmeter unit according to Claim 1, characterized in that the reflector arrangement (4) contains a single reflector body (42) in order to form a V-shaped reflection path.

3. Built-in ultrasound flowmeter unit according to Claim 2, characterized in that the reflector arrangement (4) contains a reflector body (43) in order to form a W-shaped reflection path including the inner wall of the measuring tube (M) on the transducer side and opposite the reflector body, or including the surface of the supporting and mounting plate (1) on the measuring tube side, and in that an auxiliary body (44) which has at least low reflection and is made, for example, of felt is arranged on the reflector body (43), preferably centrally between the beam axes of the US transducers (2, 3), in order to prevent reflection of stray beams from the US transmitting transducer interfering with the measurement.

4. Built-in ultrasound flowmeter unit according to Claim 1, characterized in that the reflector arrangement (4) contains two reflector bodies (45, 46) in order to form a W-shaped reflection path including the inner wall of the measuring tube (M) on the transducer side and opposite the reflector plane, or including the surface of the supporting and mounting plates (1) on the measuring tube side.

5. Built-in ultrasound flowmeter unit according to one of the preceding claims, characterized in that the retaining structure (41) comprises a linkage (411).

6. Built-in ultrasound flowmeter unit according to one of Claims 1 to 4, characterized in that the retaining structure (41) comprises a trough-like sheet-metal structure (412) which is open in the flow direction, the reflector arrangement (4) being arranged on the base of the trough-like sheet-metal structure (412).

7. Built-in ultrasound flowmeter unit according to Claim 6, characterized in that the side walls of the trough-shaped sheet-metal structure (412) have cut-outs for weight reduction and/or for the purpose of a gas or liquid exchange between the inside and outside of the trough-shaped sheet-metal structure (412).

8. Built-in ultrasound flowmeter unit according to Claim 6 or 7, characterized in that the side walls are formed and/or aligned in such a manner that they can be used as guide plates for flow harmonization and/or in order to form a relevant partial flow.

9. Built-in ultrasound flowmeter unit according to one of Claims 6 to 8, characterized in that the trough-shaped sheet-metal structure (412) is designed integrally.

10. Built-in ultrasound flowmeter unit according to Claim 9, characterized in that the side walls have at least one sheet-metal vane (413), which is bent into the interior of the trough-shaped sheet-metal structure (412), for flow guidance and/or to prevent the formation of parasitic sound paths.

## Revendications

1. Module de débitmètre à ultrasons (US) destiné à être monté dans un tube de mesure, notamment pour la mesure de masses d'air dans un moteur de véhicule automobile, comportant deux transducteurs à ultrasons, qui opèrent alternativement en tant que transducteur d'émission ou transducteur de réception, et un dispositif à réflecteurs, qui sert à former un trajet de réflexion, qui s'étend à l'intérieur du tube de mesure pour des ondes ultrasonores entre le transducteur d'émission d'ultrasons et le transducteur de réception d'ultrasons, caractérisé par le fait qu'une plaque de support et de montage (1) destinée à supporter l'un des transducteurs à ultrasons (2), l'autre transducteur à ultrasons (3) et le dispositif à réflecteurs (4) ainsi qu'au montage étanche du module (E) par l'intermédiaire d'une ouverture de réception (5) du module (E), est disposée dans le tube de mesure (M), l'un des transducteurs à ultrasons (2) et l'autre transducteur à ultrasons (3) étant disposés en étant inclinés suivant un angle prescrit l'un par rapport à l'autre et par rapport au dispositif à réflecteurs (4), de préférence symétriquement, et le dispositif à réflecteurs (4) étant porté au moyen d'une structure de fixation (41) par la plaque de support et de montage (1) à distance de cette dernière de telle sorte que le dispositif à réflecteurs forme, à l'intérieur du tube de mesure (M) et conjointement avec les transducteurs à ultrasons (2,3), le trajet de réflexion qui est nécessaire pour la mesure de débit, et que la plaque de support et de montage (1) porte une unité électronique de fonctionnement et de mesure (6), de préférence entre les deux transducteurs à ultrasons (2,3), sur sa face tournée à l'opposé du tube de mesure (M).

2. Module de débitmètre à ultrasons suivant la revendication 1, caractérisé par le fait que le dispositif à réflecteurs (4) contient un seul corps à réflecteurs (42) pour la formation d'un trajet de réflexion en forme de V.

3. Module de débitmètre à ultrasons suivant la revendication 2, caractérisé par le fait que le dispositif à réflecteurs (4) contient un corps de réflecteur (43) destiné à former un trajet de réflexion en forme de W par inclusion de la paroi intérieure du tube de mesure (M), qui est située à l'opposé du corps de mesure et est située du côté du transducteur, ou de la surface, située du côté du tube de mesure, de la plaque de support et de montage (1), et que sur le corps de réflecteur (43) et de préférence au centre entre les axes de rayonnement des transducteurs à ultrasons (2,3) est disposé un corps auxiliaire (44) au moins peu réfléchissant, constitué par exemple en feutre et destiné à empêcher une réflexion, qui est gênante lors de la mesure, de rayons dispersés du transducteur d'émission à ultrasons.

4. Module de débitmètre à ultrasons suivant la revendication 1, caractérisé par le fait que le dispositif à réflecteurs (4) contient deux corps de réflecteurs (45,46) servant à former un trajet de réflexion en forme de W par inclusion de la paroi intérieure du tube de mesure (M), qui est située du côté du transducteur à l'opposé du corps de réflecteur, ou de la surface, située du côté du tube de mesure, de la plaque de support et de montage (1).

5. Module de débitmètre à ultrasons suivant l'une des revendications précédentes, caractérisé par le fait que la structure de fixation (41) est constituée par une tringlerie (411).

6. Module de débitmètre à ultrasons suivant l'une des revendications 1 à 4, caractérisé par le fait que la structure de fixation (41) est constituée par une structure en tôle (412) en forme de cuvette, ouverte dans le sens de passage de l'écoulement, le dispositif à réflecteurs étant disposé sur le fond de la structure en forme de cuvette en tôle (412).

7. Module de débitmètre à ultrasons suivant la revendication 6, caractérisé par le fait que les parois latérales de la structure en forme de cuvette en tôle (412) comportent des ouvertures servant à réduire le poids et/ou à échanger du gaz ou du liquide entre le côté intérieur et le côté extérieur de la structure en forme de cuvette en tôle (412).

8. Module de débitmètre à ultrasons suivant la revendication 6 ou 7, caractérisé par le fait que les parois latérales sont conformées et/ou orientées de telle sorte qu'elles peuvent être utilisées comme chicanes pour harmoniser l'écoulement et/ou pour former un courant partiel important.

9. Module de débitmètre à ultrasons suivant l'une des revendications 6 à 8, caractérisé par le fait que la structure en forme de cuvette en tôle (412) est agencée sous une forme monobloc.

10. Montage de débitmètre à ultrasons suivant la revendication 9, caractérisé par le fait que les parois latérales comportent au moins une languette en tôle (413) recourbée à l'intérieur de la structure en forme de cuvette en tôle (412), pour guider l'écoulement et/ou empêcher la formation de trajets acoustiques parasites.
